# EUROPÄISCHE PATENTSCHRIFT

(11) **EP 4 097 006 B1**
(45) Veröffentlichungstag und Bekanntmachung des Hinweises auf die Patenterteilung: **26.06.2024**
(21) Anmeldenummer: 21701977.7
(22) Anmeldetag: 25.01.2021
(51) Int. Cl.: B64D 11/00

(54) **STAUFACHANORDNUNG FÜR EINE KABINE EINES FAHRZEUGS**
STORAGE COMPARTMENT ASSEMBLY FOR A CABIN OF A VEHICLE
ENSEMBLE COMPARTIMENT DE STOCKAGE POUR CABINE DE VÉHICULE

(30) Priorität: 31.01.2020 DE 102020102415
(43) Veröffentlichungstag der Anmeldung: 07.12.2022
(73) Patentinhaber: Airbus Operations GmbH, 21129 Hamburg (DE)
(72) Erfinder: GROSS, Claus-Peter, 21129 Hamburg (DE)
(74) Vertreter: LKGLOBAL Lorenz & Kopf Patentanwalt Attorney at Law PartG mbB
(86) Internationale Anmeldenummer: PCT/EP2021/051596
(87) Internationale Veröffentlichungsnummer: WO 2021/151827

(56) Entgegenhaltungen:
- EP-A1- 0 614 806
- DE-A1-102004 043 910
- DE-A1-102013 021 108
- US-A1- 2008 078 871
- US-A1- 2018 362 164

## Beschreibung

### TECHNISCHES GEBIET

Die Erfindung betrifft eine Staufachanordnung für eine Kabine eines Fahrzeugs sowie ein Fahrzeug mit einer Passagierkabine sowie mindestens einer derartigen Staufachanordnung.

### HINTERGRUND DER ERFINDUNG

Eine Ausstattung von Passagierkabinen von Flugzeugen wird üblicherweise zur Ausnutzung einer besonders hohen Raumeffizienz und gleichzeitig hohem Komfort gewählt. Abhängig von der mit dem Flugzeug durchzuführenden Reisestrecke kann der Bedarf an Stauraum für Handgepäck variieren. Es zeigt sich allerdings ein Trend des zunehmenden Handgepäcks insbesondere bei Kurzstrecken. Hierfür sind Über-Kopf-Staufächer bekannt, die ein vergrößertes Volumen und eine vergrößerte Staufachöffnung aufweisen, so dass in einzelne Staufächer mehr Gepäck einbringbar ist.

DE 10 2004 043910 A1 zeigt ein Haltesystem für ein Gepäckfach mit einer absenkbaren Schale.

US 2008/078871 A1 zeigt ein interaktives Schaltersystem für ein Stauraumsystem für ein Verkehrsflugzeug.

EP 0 614 806 A1 zeigt eine nachrüstbare Blendenanordnung zum Einbau in den Innenraum eines Flugzeugs, wobei das Flugzeug Über-Kopf-Staukästen mit Fächern aufweist.

DE 10 2013 021108 A1 zeigt ein Flugzeuggepäcksystem.

US 2018/0362164 A1 offenbart ein Flugzeug-Staufachsystem mit einem ersten Staufach und einem zweiten Staufach.

### ZUSAMMENFASSUNG DER ERFINDUNG

Das einfache Vergrößern von Staufächern kann dazu führen, dass Gepäck relativ willkürlich in Staufächern untergebracht wird und insbesondere größere Handgepäckstücke ab einer bestimmten Befüllung nicht mehr in die Staufächer passen und daher unter Passagiersitze geschoben werden müssen oder das Umsortieren von Gepäckstücken in dem Staufach erfordern.

Die Aufgabe der Erfindung ist, eine alternative Staufachanordnung vorzuschlagen, die eine größere Staukapazität insbesondere für größere Handgepäckstücke aufweist, dennoch leicht zugänglich ist und auch in kompakteren Kabinen einsetzbar ist.

Die Aufgabe wird gelöst durch eine Staufachanordnung mit den Merkmalen des unabhängigen Anspruchs 1. Vorteilhafte Ausführungsformen und Weiterbildungen sind den Unteransprüchen und der nachfolgenden Beschreibung zu entnehmen.

Es wird eine Staufachanordnung für eine Kabine eines Fahrzeugs vorgeschlagen, aufweisend mindestens ein Staufach mit einem Gehäuse, einer verschließbaren Staufachöffnung, einem in dem Gehäuse gebildeten unteren Fachabschnitt und einem in dem Gehäuse gebildeten oberen Fachabschnitt, wobei der untere Fachabschnitt und der obere Fachabschnitt direkt übereinander angeordnet sind, wobei sich die Staufachöffnung mindestens über die Bauhöhen beider Fachabschnitte erstreckt, wobei an einer zu der Staufachöffnung gerichteten unteren Begrenzung des unteren Fachabschnitts eine untere horizontale Schwenkkante gebildet ist, auf die Gepäckstücke auflegbar und in den unteren Fachabschnitt einschiebbar sind, wobei angrenzend an eine zwischen den Fachabschnitten gedachte horizontale Trennebene eine obere horizontale Schwenkkante gebildet ist, auf die Gepäckstücke auflegbar und in den oberen Fachabschnitt einschiebbar sind, und wobei die Staufachöffnung eine zu einer Oberseite des oberen Fachabschnitts gewandte obere Öffnungskante aufweist, an die sich eine über den oberen Fachabschnitt erstreckende, zu der Trennebene einen Winkel in einem Bereich von 10° bis 50° aufweisende Hilfsfläche anschließt, die mit zunehmendem Abstand von der oberen Öffnungskante einen zunehmenden Abstand zu der Trennebene einschließt.

Das mindestens eine Staufach weist ein Gehäuse auf, welches die äußere Form des Staufachs vorgibt. In dem Gehäuse werden der untere Fachabschnitt und der obere Fachabschnitt realisiert. Diese liegen direkt übereinander und kennzeichnen sich durch die weiter nachfolgend dargestellten Merkmale. Es ist vorstellbar, dass der untere Fachabschnitt und der obere Fachabschnitt zur Aufnahme von weitgehend standardisierten oder zumindest empfohlenen Gepäckstücken, beispielsweise nach IATA-Empfehlung, ausgebildet sind. Andere Dimensionen auf Basis verbreiteter Abmessungen von Gepäckstücken sind ebenso denkbar.

Die Staufachöffnung erlaubt das Bewegen von Gepäck in das Staufach hinein oder aus ihm heraus. Es ist sinnvoll, die Staufachöffnung verschließbar zu gestalten, so dass während der Benutzung des Fahrzeugs das in dem Staufach befindliche Gepäck sicher verwahrt verbleibt und nicht versehentlich in die Kabine gerät. Zum bequemen Einbringen oder Entnehmen von Gepäckstücken sind die beiden Fachabschnitte bevorzugt vollständig zu öffnen. Dies kann selektiv erfolgen oder gemeinsam.

Die untere horizontale Schwenkkante könnte als eine Begrenzungskante des unteren Fachabschnitts ausgeführt sein. Sie kann mit einem unteren Fachboden abschließen, allerdings auch etwas darüber, beispielsweise wenige Millimeter bis zu 1 oder 2 cm darüber, um eine Art Rand zu bilden. Durch den Rand können Gepäckstücke vor dem Herausrutschen gesichert werden. Dies ist insbesondere von Vorteil, wenn ein Fachboden eine leichte Neigung aufweist. Weiterhin wird die Steifigkeit des Gehäuses des Staufachs dadurch verbessert. Ein Gepäckstück, beispielsweise ein Kabinentrolley, kann auf die untere Schwenkkante aufgelegt werden, um anschließend über sie rutschend in den unteren Fachabschnitt geschoben zu werden.

Ein Benutzer kann folglich beispielsweise auf einem Gang in der Kabine neben Passagiersitzen stehen, sein Gepäckstück hochheben und auf die untere Schwenkkante legen, um dann durch Nachschieben das Gepäckstück vollständig in den unteren Fachabschnitt zu schieben. Die untere Schwenkkante erleichtert dabei die Handhabung, da bereits beim Beginn des Einbringens des Gepäckstücks ein Teil des Gewichts von dem Staufach aufgenommen wird und der Benutzer weniger Kraft aufwenden muss.

Analog dazu wird für den oberen Fachabschnitt eine obere Schwenkkante bereitgestellt. Diese befindet sich angrenzend an eine gedachte Trennebene zwischen den beiden Fachabschnitten. Die Trennebene ist dabei als eine Fläche zu verstehen, welche zwischen den beiden Fachabschnitten verläuft und eine gedachte Unterteilung des mindestens einen Staufachs darstellt. Die Trennebene kann bevorzugt parallel zu einem Kabinenfußboden ausgerichtet sein, wenn sich die Staufachanordnung in einer Kabine befindet, oder sie könnte einen Winkel von bis zu 5° hierzu einschließen. Die obere Schwenkkante kann direkt in der Trennebene liegen, allerdings auch lediglich die Trennebene berühren oder wenige Millimeter bis zu 1 oder 2 cm oberhalb der Trennebene liegen. Ziel ist, mit der oberen Schwenkkante einem Benutzer zu ermöglichen, ein Gepäckstück auf die obere Schwenkkante zu stützen und durch Schieben das Gepäckstück entlang der oberen Schwenkkante das Gepäckstück in den oberen Fachabschnitt zu bringen.

Dabei ist denkbar, dass bei der Nutzung des Fahrzeugs die Fachabschnitte grundsätzlich nacheinander befüllt werden, wobei zuerst der untere Fachabschnitt und dann der obere Fachabschnitt mit Gepäckstücken befüllt werden. Gepäckstücke, die sich in dem oberen Fachabschnitt befinden, liegen dann folglich größtenteils auf Gepäckstücken auf, die in dem unteren Fachabschnitt liegen. Es ist weiterhin denkbar, dass die Gepäckstücke in dem oberen Fachabschnitt auch auf der oberen Schwenkkante aufliegen. Diese kann bevorzugt in horizontaler Richtung von der Staufachöffnung beabstandet sein.

Durch diese Ausgestaltung kann eine besonders raumsparende Anordnung von Staufächern mit gleichzeitig hoher Gepäckkapazität realisiert werden, welche auch in Verkehrsmitteln mit geringeren Rumpfabmessungen integrierbar sind. Die Kabine des Fahrzeugs kann folglich höhere Kapazitäten zur Aufnahme von Handgepäck aufweisen. Damit kann jedoch in dem oberen Fachabschnitt eine möglicherweise höher gelegene Zugriffsöffnung für Gepäckstücke resultieren. Ein Benutzer müsste dann ein Gepäckstück möglicherweise etwas höher heben, um es in den oberen Fachabschnitt zu bringen. Die obere Schwenkkante kann jedoch dabei über einen wesentlichen Abschnitt des Vorgangs des Einbringens des Gepäckstücks unterstützend wirken und den Kraftbedarf des Benutzers reduzieren.

Um einfacher und gezielter das Gepäckstück in den oberen Fachabschnitt einschieben zu können, ist die vorangehend genannte Hilfsfläche vorgesehen. Diese befindet sich in vertikaler Richtung oberhalb des oberen Fachabschnitts und schließt mit der Trennebene den vorangehend genannten Winkel ein. Sobald es wenige Zentimeter in den oberen Fachabschnitt ragt und auf der oberen Schwenkkante aufliegt, befindet sich eine obere Oberfläche des Gepäckstücks zwischen der oberen Schwenkkante und der Hilfsfläche in einem Flächenkontakt mit der Hilfsfläche. Dabei liegt der Schwerpunkt des Gepäckstücks außerhalb des Staufachs. Durch die Lage des Schwerpunkts wirkt auf das Gepäckstück ein Drehmoment um die obere Schwenkkante herum in Richtung der Hilfsfläche, sodass folglich die obere Oberfläche des Gepäckstücks durch das Eigengewicht des Gepäckstücks auf die Hilfsfläche gedrückt wird. Folglich unterstützt die Hilfsfläche die Aufnahme des Gewichts und fungiert gleichzeitig als Führung der oberen Oberfläche zum Einschieben des Gepäckstücks in den oberen Fachabschnitt.

Die Führung kann dahingehend optimiert werden, dass ein Abstand zwischen der oberen Schwenkkante und der Hilfsfläche auf bevorzugte Gepäckstücke, beispielsweise Kabinentrolleys, angepasst ist. Der zwischen der Trennebene und der Hilfsfläche eingeschlossene Winkel ist weiter bevorzugt derart gewählt, dass ein durchschnittlicher Benutzer, der das Gepäckstück auf die obere Schwenkkante liegt, das Gepäckstück anschließend mit einem solchen Winkel zu dem Kabinenfußboden hält, dass der zwischen der oberen Schwenkkante und der Hilfsfläche eingeschlossene Raum das Einschieben des Gepäckstücks ermöglicht. Der Winkel kann etwa 10° bis 50°, bevorzugt 10° bis 30° und besonders bevorzugt 15° bis 25° betragen. Die genaue Auswahl des Winkels kann von dem Abstand der oberen horizontalen Schwenkkante zu dem Fußboden und/oder zu dem Gang abhängig sein.

Insgesamt wird durch die erfindungsgemäße Staufachanordnung eine besonders vorteilhafte Kombination übereinanderliegender Fächer in platzsparender Weise erlaubt, ohne das Komfortempfinden in der Kabine einzuschränken.

Es ist besonders bevorzugt, wenn zwischen dem unteren Fachabschnitt und dem oberen Fachabschnitt keine Trennwand angeordnet ist. Durch das Einsparen einer Trennwand kann nicht nur Gewicht, sondern auch Bauvolumen eingespart werden. Die beiden Fachabschnitte sind folglich physisch nicht voneinander getrennt, sondern gehen im Innern des Staufachs ineinander über. Lediglich die obere horizontale Schwenkkante ist in der Trennebene oder etwas darüber angeordnet und könnte eine Art Unterteilung darstellen, die einen Benutzer veranlasst, sein Gepäckstück entweder unterhalb oder oberhalb der oberen Schwenkkante einzubringen. Bei dieser Ausführungsform ist, wie vorangehend dargestellt, eine aufeinanderfolgende Befüllung des unteren Fachabschnitts und des oberen Fachabschnitts sinnvoll.

Die obere horizontale Schwenkkante ist durch ein längliches, starres Element gebildet, welches sich parallel zu der oberen Öffnungskante erstreckt. In einer bevorzugten Ausführungsform könnte dieses Element eine Stange oder ein Rohr sein, das einen hohlen Querschnitt aufweist. Der Querschnitt könnte beispielsweise kreisrund sein, sodass sich der effektive, zur Aufnahme von Lasten eines Gepäckstücks wirksame Querschnitt auch bei Verdrehung des Elements nicht ändert. Es sind selbstverständlich auch andere Elemente möglich, die beispielsweise als komplexere Vollprofile oder Hohlprofile ausführbar sind. Da das Element bei der regelmäßigen Verwendung des oberen Fachabschnitts besonders stark belastet wird, kann das Element besonders bevorzugt aus einem metallischen Material ausgebildet sein oder eine Umhüllung aus einem metallischen Material aufweisen.

Es ist besonders bevorzugt, wenn das Element, welches die obere horizontale Schwenkkante bildet, herausnehmbar ist. Damit können deutlich größere Gepäckstücke untergebracht werden.

Der untere Fachabschnitt und der obere Fachabschnitt könnten zumindest im Bereich der Staufachöffnung horizontal zueinander versetzt sein. Der horizontale Versatz erlaubt eine Anordnung des oberen Fachabschnitts in einem Bereich eines Rumpfquerschnitts, der sich prägnant in horizontaler Richtung erstreckt. Dies kann etwa ein oberer Teil des Rumpfquerschnitts sein, der direkt unterhalb des Deckenbereichs (die sogenannte "Crown Area" eines Rumpfquerschnitts) liegt. Zum Bereitstellen einer ausreichenden Tiefe des oberen Fachabschnitts für ein Gepäckstück mit einer vorbestimmten Dicke ist ein vorderes Ende des oberen Fachabschnitts in horizontaler Richtung folglich etwas weiter in Richtung der Kabine zu versetzen.

Es ist vorteilhaft, wenn die obere horizontale Schwenkkante in horizontaler Richtung von der unteren horizontalen Schwenkkante und der oberen Öffnungskante beabstandet ist. Die obere horizontale Schwenkkante liegt folglich in einem Bereich horizontal zwischen der unteren horizontalen Schwenkkante und der oberen Öffnungskante. Ein Gepäckstück, das in den oberen Fachabschnitt eingelegt wird, kann folglich auch bei geschlossenem Staufach auf der oberen horizontalen Schwenkkante aufliegen. Das Gepäckstück wird dann von dem Gepäckstück im unteren Fachabschnitt und der oberen horizontalen Schwenkkante gestützt.

In einer besonders vorteilhaften Ausführungsform sind der untere Fachabschnitt und der obere Fachabschnitt jeweils dazu ausgebildet, mehrere Handgepäckstücke mit IATA-Standard-Maximalabmessungen nebeneinander aufzunehmen. Die Handgepäckstücke können etwa ein Maß von 55 × 40 × 20 cm aufweisen. Unter Berücksichtigung von Rollen, Handgriffen und ähnlichem kann ein Maß von etwa 56 × 40 × 25 cm angenommen werden, wobei letzteres Maß auch noch etwas überschritten werden könnte. Es könnten sich etwa umhüllende Maße von 610 mm × 406 mm × 254 mm oder leicht abweichende Maße anbieten. Bei der Ausgestaltung der beiden Fachabschnitte auf einer solchen Basis können folglich 90 % oder mehr der gängigen Handgepäckstücke aufgenommen werden. Die Fachabschnitte können durch enge Anpassung an diese Maße einen Benutzer intuitiv dazu bringen, Gepäckstücke in gleicher Ausrichtung nebeneinander anzuordnen, sodass eine größtmögliche Menge von Handgepäckstücken aufgenommen werden kann.

Der untere Fachabschnitt weist einen Boden auf, der zu der Trennebene einen Abstand von höchstens 35 cm und bevorzugt von höchstens 30 cm aufweist. Durch die Begrenzung der Höhe des unteren Fachabschnitts kann ein Benutzer das Handgepäckstück lediglich in einer dafür vorgesehenen Ausrichtung einschieben. Die obere Schwenkkante dient dabei als eine Art Begrenzung, sodass das hochkante Einschieben des Gepäckstücks verhindert wird. Ein Abstand von bis zu 35 cm bzw. bevorzugt von bis zu 30 cm erlaubt das Einschieben eines Handgepäckstücks mit einer Dicke von beispielsweise bis zu 25 oder 26 cm und könnte sogar das Ablegen einer Jacke oder dergleichen darauf ermöglichen.

Eine durch die Hilfsfläche aufgespannte Hilfsebene weist einen Abstand in einem Bereich von 20 bis 45 cm und bevorzugt von 25 bis 35 cm zu der oberen Schwenkkante auf. Der Abstand der Hilfsebene ist dann auf die vorangehend genannte, empfohlene Handgepäckstückdicke angepasst und erlaubt das problemlose Einschieben des Handgepäckstücks in den oberen Fachabschnitt. Gleichzeitig wird jedoch auch das vorangehend erläuterte Unterstützen des Gepäckstücks durch die Hilfsfläche begünstigt.

In einer weiter bevorzugten Ausführungsform ist die Staufachöffnung durch eine obere Staufachklappe und eine untere Staufachklappe verschließbar, wobei die untere Staufachklappe dem unteren Fachabschnitt und die obere Staufachklappe dem oberen Fachabschnitt zugeordnet ist. Beide Staufachklappen könnten in entgegengesetzte Richtungen geöffnet werden. Die obere Staufachklappe könnte etwa an einem oberen Ende des oberen Fachabschnitts angeordnet sein und durch Schwenken nach oben geöffnet werden. Die untere Staufachklappe könnte an einem unteren Ende des unteren Fachabschnitts schwenkbar gelagert sein und nach unten aufgeschwenkt werden. Durch Öffnen beider Staufachklappen wird folglich das gesamte Staufach geöffnet, sodass Gepäckstücke in die Fachabschnitte hinein oder aus den Fachabschnitten heraus befördert werden können. Es könnte sinnvoll sein, die obere Staufachklappe an der unteren Staufachklappe zu verriegeln oder umgekehrt. Beide Staufachklappen bilden dann einen zusammenhängenden Verschluss mit lediglich einem einzelnen Beschlag, sodass das hierdurch erreichte Gewicht möglichst gering ist.

Besonders bevorzugt weist die Staufachanordnung ferner mindestens eine Passagier-Service-Einheit oder einen Servicekanal an einer Unterseite des Gehäuses auf. Damit eignet sich die Staufachanordnung zur direkten Anordnung oberhalb von Passagiersitzen. Ein Servicekanal könnte mehrere Passagierserviceeinheiten aufnehmen und beispielsweise verschiebbar oder zumindest an einer einstellbaren Position befestigbar aufnehmen. Die Passagierserviceeinheiten bieten dann insbesondere die üblichen Funktionen wie Leselicht, Luftdüse, das Bereitstellen einer Anzeigeeinheit sowie von Sauerstoffmasken.

Es ist vorteilhaft, wenn die Passagier-Service-Einheit oder der Servicekanal stufenlos und kontinuierlich gekrümmt in eine Form des Gehäuses übergeht. Damit kann nicht nur die optische Form ansprechend gestaltet, sondern auch mögliche Stoßkanten verhindert werden. Ist die Staufachanordnung mit ihrem unteren Ende etwas tiefer gelegen als bei üblichen, kleineren Staufächern, ist dies besonders vorteilhaft.

Die Erfindung betrifft ferner ein Fahrzeug mit einer Kabine, einem Fußboden, auf dem Fußboden befindlichen Passagiersitzen sowie mindestens einer oberhalb der Passagiersitze angeordneten Staufachanordnung gemäß den vorangehenden Ausführungen. Es kann sich dabei um eine Kabine mit einem Mittelgang handeln, der zwei Passagiersitzabschnitte mit jeweils drei nebeneinander liegenden Passagiersitzen voneinander trennt. Alternativ dazu kann die Kabine auch zwei voneinander beabstandete und parallel zueinander verlaufende Gänge aufweisen, die drei Passagiersitzabschnitte voneinander trennen. Diese könnten dann insbesondere zwei laterale, außenliegende Passagiersitzabschnitte und einen mittleren Passagiersitzabschnitt aufweisen. Über außenliegenden und/oder über einem mittleren Passagiersitzabschnitt könnte eine Staufachanordnung vorgesehen sein.

Es ist bevorzugt, wenn die untere horizontale Schwenkkante einen vertikalen Abstand in einem Bereich von 150-170 cm von dem Fußboden aufweist. Damit können etwa Passagierkabinen mit der erfindungsgemäßen Staufachanordnung bestückt werden, die in einem Fahrzeug, insbesondere einem Flugzeug, mit einem Rumpfdurchmesser von höchstens 6 m, bevorzugt von höchstens 5 m und besonders bevorzugt von höchstens 4 m aufweist. Der vertikale Abstand erlaubt das leichte Einbringen von Gepäckstücken in den unteren Fachabschnitt und schränkt das Komfortempfinden von Passagieren direkt unterhalb der Staufachanordnung nicht ein.

Es kann außerdem vorteilhaft sein, wenn die obere horizontale Schwenkkante einen vertikalen Abstand in einem Bereich von 175-195 cm aufweist. Gepäckstücke können dadurch auch relativ einfach in den oberen Fachabschnitt eingebracht werden.

Schließlich kann die Hilfsfläche zu der Trennebene einen Winkel in einem Bereich von 15° bis 25° einschließen. Die Hilfsfläche könnte insbesondere bei den vorangehend genannten vertikalen Abständen das Gepäckstück für den oberen Fachabschnitt stützen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 zeigt eine Kabine mit einer Staufachanordnung oberhalb von Passagiersitzen in einer teilweisen Querschnittsansicht.
Fig. 2 zeigt eine dreidimensionale Ansicht auf die Kabine aus Fig. 1 mit geöffnetem Staufach.
Fig. 3 und 4 zeigen Modifikationen mit abgewandelter Staufachanordnung bei abweichendem Kabinenlayout.
Fig. 5 zeigt ein Flugzeug.
Fig. 6a und 6b zeigen den Vorgang des Einbringens eines Gepäckstücks in den oberen Fachabschnitt.

### DETAILLIERTE DARSTELLUNG EXEMPLARISCHER AUSFÜHRUNGSFORMEN

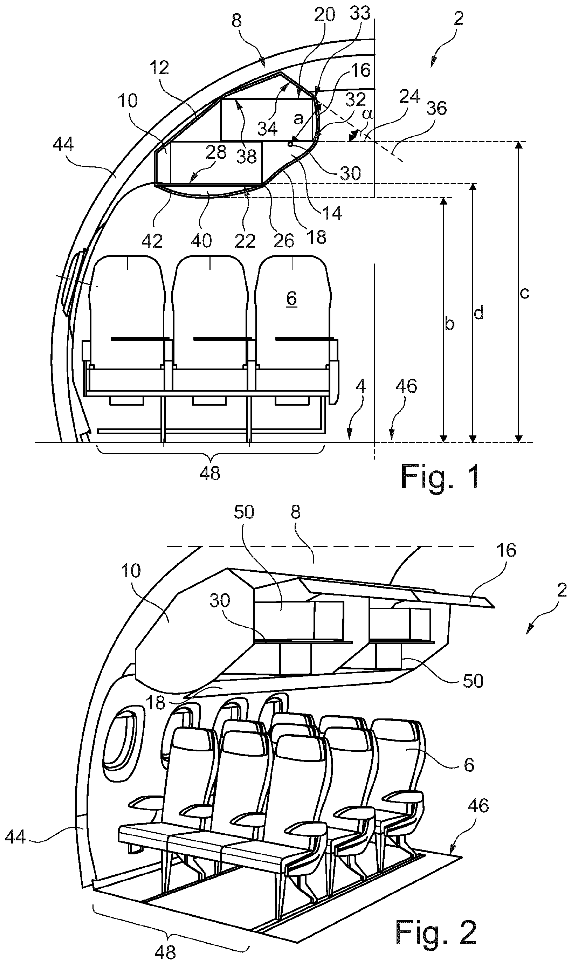

Fig. 1 zeigt eine Passagierkabine 2 eines Verkehrsflugzeugs mit einem Fußboden 4, darauf befindlichen Passagiersitzen 6 und einer darüber positionierten Staufachanordnung 8. Die Staufachanordnung 8 weist mindestens ein Staufach 10 auf, das ein Gehäuse 12 besitzt. Es könnte sich beispielsweise über eine Länge von vier Spantfeldern des Flugzeugs erstrecken. Dies könnte beispielsweise drei Sitzreihen mit engerem Sitzabstand entsprechen. Das Gehäuse 12 könnte das Staufach 10 vollständig umgeben oder zumindest rückwärtig zumindest offen sein. Das Staufach 10 weist eine Staufachöffnung 14 auf, die durch eine obere Staufachklappe 16 und eine untere Staufachklappe 18 verschließbar ist. In dem Staufach 10 sind weiterhin ein oberer Fachabschnitt 20 und ein unterer Fachabschnitt 22 gebildet. Die beiden Fachabschnitte 20 und 22 liegen direkt übereinander und werden nicht durch ein physisches Element unterteilt. Zwischen ihnen befindet sich eine Trennebene 24, welche gestrichelt dargestellt und lediglich eine gedachte Ebene ist. Sie verläuft insbesondere parallel zu dem Fußboden 4, so dass die obere Begrenzung des unteren Fachabschnitts 22 und die untere Begrenzung des oberen Fachabschnitts 20 parallel zu dem Fußboden 4 verlaufen. Die Staufachöffnung 14 erstreckt sich mindestens über die Bauhöhen beider Fachabschnitte 20 und 22, so dass Gepäckstücke frei in die Fachabschnitte 20 und 22 einbringbar sind.

Zum Unterstützen des Einlegens eines Gepäckstücks in den unteren Fachabschnitt 22 ist eine untere horizontale Schwenkkante 26 vorgesehen. Diese schließt exemplarisch mit einer unteren Vorderkante des unteren Fachabschnitts 22 ab. Ein Benutzer kann ein Gepäckstück auf die untere Schwenkkante 26 auflegen, um das Gepäckstück dann an der unteren Schwenkkante 26 entlang in den unteren Fachabschnitt 22 zu schieben. Über den Schiebeweg wird das Gepäckstück stets von der unteren Schwenkkante 26 gestützt.

Der untere Fachabschnitt 22 weist einen Fachboden 28 auf, auf dem das Gepäckstück nach dem Einschieben ruht. Der untere Fachabschnitt 22 ist beispielhaft so dimensioniert, dass ein Gepäckstück mit Abmessungen nach IATA-Empfehlungen aufnehmbar sind. Dieses weist etwa eine Länge von etwa 55 cm, eine Breite von etwa 40 cm und eine Dicke von etwa 20 - 25 cm auf. In dem gezeigten Beispiel lässt sich das Gepäckstück flach und in Längsrichtung einschieben, d.h. mit einem Boden eines liegenden Gepäckstücks zuerst. Die in der Zeichnungsebene der Fig. 1 ersichtliche Tiefe des unteren Fachabschnitts 22 beträgt an einer Oberseite des unteren Fachabschnitts 22 daher etwas mehr als 55 cm. Dies ist in einer Höhe von beispielsweise 5 cm mehr als der Dicke des Gepäckstücks, d.h. etwa 25-30 cm oberhalb des Fachbodens 28 gemessen.

Der obere Fachabschnitt 20 weist in einer Höhe von 25-30 cm oberhalb der Trennebene 24 ebenso eine Tiefe von etwas mehr als 55 cm auf, sodass ebenso ein Handgepäckstück mit empfohlenen Abmessungen einbringbar ist. Zum Vereinfachen des Einschiebens ist eine obere horizontale Schwenkkante 30 vorgesehen, die in horizontaler Richtung zwischen der unteren horizontalen Schwenkkante 26 und der unteren Vorderkante 32 des oberen Fachabschnitts 20 liegt. Ein Benutzer kann ein Gepäckstück auf die obere horizontale Schwenkkante 30 auflegen und es entlang der oberen horizontalen Schwenkkante 30 in den oberen Fachabschnitt 20 schieben.

Eine Besonderheit liegt in einer Hilfsfläche 34, die sich von einer oberen Öffnungskante 33 über den oberen Fachabschnitt 20 erstreckt und zu der Trennebene 24 einen Winkel in einem Bereich von 10° bis 50° einschließt. Die Hilfsfläche 34 schließt weiterhin mit zunehmendem horizontalen Abstand von der oberen Begrenzung des oberen Fachabschnitts 20 in das Staufachinnere einen zunehmenden Abstand zu der Trennebene 24 ein. Der Abstand a der Hilfsfläche 34 zu der oberen Schwenkkante 30, vertikal zu einer Hilfsebene 36 gemessen, könnte im Wesentlichen der Höhe des unteren Fachabschnitts 22 entsprechen. Ein Gepäckstück, das von einem Benutzer zwischen der oberen horizontalen Schwenkkante 30 und der Hilfsfläche 34 in den oberen Fachabschnitt 20 eingesetzt wird, liegt folglich auf der oberen Schwenkkante 30 auf, wobei dessen Oberseite schwerkraftbedingt an die Hilfsfläche 34 gedrückt wird. Die Anordnung unterstützt den Benutzer folglich, beim Umsetzen der Hände das Gepäckstück festzuhalten, sodass die Handhabung deutlich erleichtert wird.

Rückwärtig schließt sich eine Rückwand 38 an, welche zwischen der Hilfsfläche 34 und einem lateral außenliegenden Ende des Fachbodens 28 verläuft. Unterhalb des Fachbodens 28 schließt sich eine Passagierserviceeinheit 40 an, die von einer Verkleidung 42 umgeben ist, welche eine kontinuierliche Krümmung aufweist.

Exemplarisch ist die Kabine 2 in einem Flugzeugrumpf 44 gebildet, der einen Durchmesser von etwa 4 m aufweist. Der Fußboden 4 liegt etwas unterhalb eines Mittelpunkts des Rumpfquerschnitts. Beispielhaft kann der lichte Abstand b zwischen der PSU 40 und dem Fußboden 4 ungefähr 150 cm betragen. Die untere Schwenkkante 26 könnte sich in einem Abstand a von 150 bis 170 cm über dem Fußboden 4 befinden und in dem gezeigten Beispiel etwa 160 cm. Die obere Schwenkkante 30 könnte in einem Abstand c von etwa 185 cm über dem Fußboden 4 angeordnet sein.

Aufgrund der signifikanten Krümmung des Rumpfs 44 rückseitig des Staufachs 10 ist zum Bereitstellen einer ausreichenden Tiefe des oberen Fachabschnitts 20 ein horizontaler Versatz zwischen der Vorderkante 32 des oberen Fachabschnitts 20 und der unteren Schwenkkante 26 vorgesehen. Dieser könnte in dem gezeigten Beispiel in einem Bereich zwischen 25 und 35 cm liegen.

An dieser Stelle sei darauf hingewiesen, dass die Kabine 2 einen Mittelgang 46 aufweist, an den sich beidseitig jeweils Passagiersitzabschnitte 48 anschließen, die mit Sitzreihen zu jeweils drei Passagiersitzen 6 bestückt sind. Beidseitig des Mittelgangs 46 können sich oberhalb der Passagiersitze 6 jeweils Staufächer 10 befinden, welche sich in Längsrichtung der Kabine aneinanderreihen. Der Raum oberhalb des Mittelgangs 46 bleibt in diesem Beispiel frei.

Erstreckt sich das Staufach 10 beispielsweise über drei Spantfelder, kann es in jedem Fachabschnitt fünf Gepäckstücke mit den vorangehend genannten Maßen aufnehmen, so dass das Staufach 10 eine Aufnahmekapazität für zehn derartiger Gepäckstücke aufweist, welche nebeneinander und quer zur Erstreckung des Gangs angeordnet werden.

Fig. 2 zeigt weiterhin den Aufbau aus einer etwas geänderten Perspektive, wobei die Staufachklappen 16 und 18 geöffnet sind. Hier ist ersichtlich, dass Gepäckstücke 50 in den Fachabschnitten 20 und 22 angeordnet sind, wobei die in dem oberen Fachabschnitt 20 liegenden Gepäckstücke 50 auf den Gepäckstücken 50 in dem unteren Fachabschnitt 22 sowie auf der oberen Schwenkkante 30 aufliegen. Die Gepäckstücke 40 liegen dabei flach in dem jeweiligen Fachabschnitt 20 bzw. 22 und ihre Längsachse erstreckt sich quer zu dem Mittelgang 46 in die Fachabschnitte 20 und 22.

Die Staufachklappen 16 und 18 können jeweils in Richtung der Trennebene 24 geschwenkt werden. Dort können sie aneinander verriegeln, beispielsweise durch einen hier nicht näher gezeigten Beschlag. Dies bedeutet, dass die obere Staufachklappe 16 an der unteren Staufachklappe 18 arretiert wird, bzw. umgekehrt.

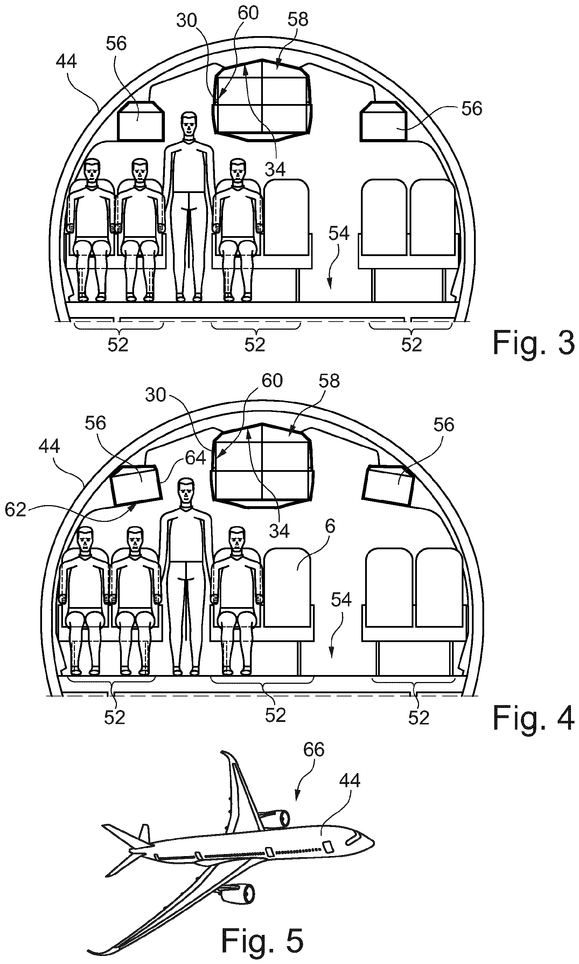

Fig. 3 zeigt eine Abwandlung, bei der drei Passagiersitzabschnitte 52 vorgesehen sind, die durch zwei Gänge 54 voneinander getrennt sind. Jeder Passagiersitzabschnitt 52 weist Reihen zu je zwei Passagiersitzen 2 auf. Oberhalb der lateral angeordneten äußeren Passagiersitzabschnitte 52 sind kleine Staufächer 56 angeordnet, die Handgepäckstücke aufnehmen können, welche in Längsrichtung der Gänge 54 eingebracht werden können. Die kleinen Staufächer 56 sind starr.

Oberhalb des mittleren Passagiersitzabschnitts 52 ist eine Staufachanordnung 58 angeordnet, die ähnlich wie die Staufachanordnung 8 aus Fig. 1 und 2 ausgebildet ist. Allerdings sind die übereinander angeordneten Fachabschnitte 20 und 22 in horizontaler Richtung nicht versetzt und die obere Schwenkkante 30 ist an einer Außenkante 60 des oberen Fachabschnitts 20 angeordnet. Die Hilfsfläche 34 erstreckt sich weiterhin über eine größere Tiefe über den oberen Fachabschnitt 20.

In Fig. 4 ist die Variante aus Fig. 3 etwas weiter dahingehend abgewandelt, dass die kleinen Staufächer 56 einen nach oben schwenkbaren Boden 62 aufweisen, welcher einen größeren Abstand zu den Passagiersitzen 6 ermöglicht. Im befüllten Zustand können die kleinen Staufächer 56 durch leichtes Aufschwenken kompaktiert werden, um eine Staufachklappe 64 dann zu schließen. Diese könnte die Stellung der kleinen Staufächer 56 dann arretieren.

Fig. 5 zeigt ein Flugzeug 66, das den Rumpf 44 aufweist, in dem die Kabine 2 angeordnet ist. Diese kann eine Staufachanordnung aus den vorangehenden Figuren aufweisen.

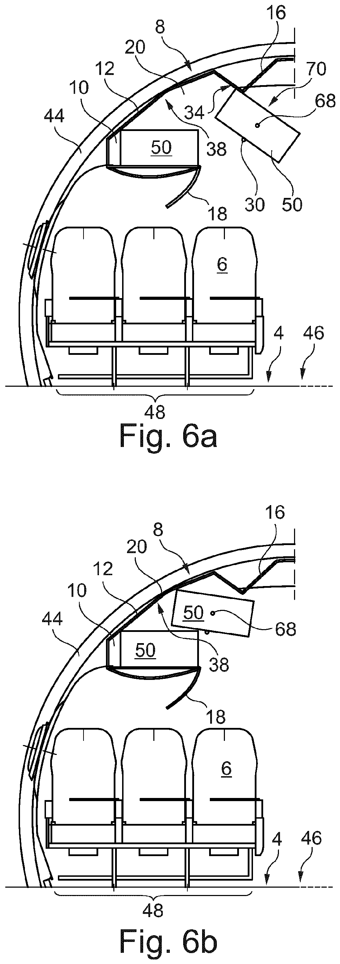

In Fig. 6a und 6b wird der Vorgang des Einlegens eines Gepäckstücks 50 in den oberen Fachabschnitt 20 gezeigt. Hierzu wird der Schwerpunkt 68 des Gepäckstücks 50 dargestellt. In Fig. 6a befindet sich der Schwerpunkt 68 in horizontaler Richtung außerhalb der oberen Schwenkkante 30, sodass das Gepäckstück 50 schwerkraftbedingt ein Moment um die obere Schwenkkante 30 erfährt. Hierdurch wird eine Oberseite 70 des Gepäckstücks 50 an die Hilfsfläche 34 gedrückt. Das Gepäckstück 50 wird dadurch zwischen der oberen Schwenkkante 32 und der Hilfsfläche 34 gehalten und geführt. Durch ein Nachschieben des Gepäckstücks 50 in Richtung des oberen Staufachs 20 gelangt der Schwerpunkt 68 über die obere Schwenkkante 30 und weiter in den oberen Fachabschnitt 20 hinein, sodass das Gepäckstück 50 eine Schwenkbewegung in Richtung der Trennebene 24 durchführt. Durch ein Weiterschieben gerät das Gepäckstück 50 rutschend auf einem darunter in dem unteren Fachabschnitt 22 liegenden Gepäckstück 50 in Richtung der Rückwand 38.

### BEZUGSZEICHEN

- 2: Passagierkabine
- 4: Fußboden
- 6: Passagiersitz
- 8: Staufachanordnung
- 10: Staufach
- 12: Gehäuse
- 14: Staufachöffnung
- 16: obere Staufachklappe
- 18: untere Staufachklappe
- 20: oberer Fachabschnitt
- 22: unterer Fachabschnitt
- 24: Trennebene
- 26: untere horizontale Schwenkkante
- 28: Fachboden
- 30: obere horizontale Schwenkkante
- 32: untere Vorderkante
- 33: obere Öffnungskante
- 34: Hilfsfläche
- 36: Hilfsebene
- 38: Rückwand
- 40: Passagierserviceeinheit
- 42: Verkleidung
- 44: Flugzeugrumpf
- 46: Mittelgang
- 48: Passagiersitzabschnitt
- 50: Gepäckstück
- 52: Passagiersitzabschnitt
- 54: Gang
- 56: kleines Staufach
- 58: Staufachanordnung
- 60: Außenkante
- 62: schwenkbarer Boden
- 64: Staufachklappe
- 66: Flugzeug
- 68: Schwerpunkt
- 70: Oberseite des Gepäckstücks

- α: Winkel Hilfsfläche

- a: Abstand obere Schwenkkante/Hilfsfläche
- b: Höhe Passagierserviceeinheit
- c: Abstand obere Schwenkkante/Fußboden
- d: Abstand untere Schwenkkante/Fußboden

## Patentansprüche

1. Staufachanordnung (8, 58) für eine Kabine (2) eines Fahrzeugs (66), aufweisend:
mindestens ein Staufach (10) mit einem Gehäuse (12), einer verschließbaren Staufachöffnung (14), einem in dem Gehäuse (12) gebildeten unteren Fachabschnitt (22) und einem in dem Gehäuse (12) gebildeten oberen Fachabschnitt (20),
wobei der untere Fachabschnitt (22) und der obere Fachabschnitt (20) direkt übereinander angeordnet sind,
wobei sich die Staufachöffnung (14) mindestens über die Bauhöhen beider Fachabschnitte (20, 22) erstreckt,
wobei an einer zu der Staufachöffnung (14) gerichteten unteren Begrenzung des unteren Fachabschnitts (22) eine untere horizontale Schwenkkante (26) gebildet ist, auf die Gepäckstücke (50) auflegbar und in den unteren Fachabschnitt (22) einschiebbar sind,
wobei angrenzend an eine zwischen den Fachabschnitten (20, 22) gedachte horizontale Trennebene (24) eine obere horizontale Schwenkkante (30) gebildet ist, auf die Gepäckstücke (50) auflegbar und in den oberen Fachabschnitt (20) einschiebbar sind,
wobei die Staufachöffnung (14) eine zu einer Oberseite des oberen Fachabschnitts (20) gewandte obere Öffnungskante (33) aufweist, an die sich eine über den oberen Fachabschnitt (20) erstreckende, zu der Trennebene (24) einen Winkel (a) in einem Bereich von 10° bis 50° aufweisende Hilfsfläche (34) anschließt, die mit zunehmendem Abstand von der oberen Öffnungskante (33) einen zunehmenden Abstand zu der Trennebene (24) einschließt,
wobei die obere horizontale Schwenkkante (30) durch ein längliches, starres Element gebildet ist, welches sich parallel zu der oberen Öffnungskante (33) erstreckt,
wobei eine durch die Hilfsfläche (34) aufgespannte Hilfsebene (36) einen Abstand in einem Bereich von 20 bis 45 cm und bevorzugt von 25 bis 35 cm zu der oberen horizontalen Schwenkkante (30) aufweist, und
wobei der untere Fachabschnitt (22) einen Fachboden (28) aufweist, der zu der Trennebene (24) einen Abstand von höchstens 35 cm und bevorzugt von höchstens 30 cm aufweist.

2. Staufachanordnung (8, 58) nach Anspruch 1,
wobei zwischen dem unteren Fachabschnitt (22) und dem oberen Fachabschnitt (20) keine Trennwand angeordnet ist.

3. Staufachanordnung (8, 58) nach einem der vorhergehenden Ansprüche, wobei der untere Fachabschnitt (22) und der obere Fachabschnitt (20) zumindest im Bereich der Staufachöffnung (14) horizontal zueinander versetzt sind.

4. Staufachanordnung (8, 58) nach einem der vorhergehenden Ansprüche,
wobei die obere horizontale Schwenkkante (30) in horizontaler Richtung von der unteren horizontalen Schwenkkante (26) und der oberen Öffnungskante (33) beabstandet ist.

5. Staufachanordnung (8, 58) nach einem der vorhergehenden Ansprüche,
wobei der untere Fachabschnitt (22) und der obere Fachabschnitt (20) jeweils dazu ausgebildet sind, mehrere Handgepäckstücke mit IATA-Standard-Maximalabmessungen nebeneinander aufzunehmen.

6. Staufachanordnung (8, 58) nach einem der vorhergehenden Ansprüche,
wobei die Staufachöffnung (14) durch eine obere Staufachklappe (16) und eine untere Staufachklappe (18) verschließbar ist,
wobei die untere Staufachklappe (18) dem unteren Fachabschnitt (22) und die obere Staufachklappe (16) dem oberen Fachabschnitt (20) zugeordnet ist.

7. Staufachanordnung (8, 58) nach einem der vorhergehenden Ansprüche,
ferner aufweisend mindestens eine Passagier-Service-Einheit (40) oder einen Servicekanal an einer Unterseite des Gehäuses (12).

8. Staufachanordnung (8, 58) nach Anspruch 7,
wobei die Passagier-Service-Einheit (40) oder der Servicekanal stufenlos und kontinuierlich gekrümmt in eine Form des Gehäuses (12) übergeht.

9. Fahrzeug (66) mit einer Kabine (2), einem Fußboden (4), auf dem Fußboden (4) befindlichen Passagiersitzen (6) sowie mindestens einer oberhalb der Passagiersitze (6) angeordneten Staufachanordnung (8, 58) nach einem der Ansprüche 1 bis 8.

10. Fahrzeug nach Anspruch 9,
wobei die untere horizontale Schwenkkante (26) einen vertikalen Abstand (d) in einem Bereich von 150-170 cm von dem Fußboden (4) aufweist.

11. Fahrzeug nach Anspruch 9 oder 10,
wobei die obere horizontale Schwenkkante (30) einen vertikalen Abstand (c) in einem Bereich von 175-195 cm von dem Fußboden (4) aufweist.

12. Fahrzeug nach einem der Ansprüche 9 bis 11,
wobei die Hilfsfläche zu der Trennebene (24) einen Winkel (a) in einem Bereich von 15° bis 25° einschließt.

## Claims

1. Storage compartment arrangement (8, 58) for a cabin (2) of a vehicle (66), having:
at least one storage compartment (10) with a housing (12), a closable storage compartment opening (14), a lower compartment section (22) formed in the housing (12), and an upper compartment section (20) formed in the housing (12),
wherein the lower compartment section (22) and the upper compartment section (20) are arranged directly one above the other,
wherein the storage compartment opening (14) extends at least over the structural heights of both compartment sections (20, 22),
wherein, at a lower delimitation of the lower compartment section (22) directed towards the storage compartment opening (14), a lower horizontal pivoting edge (26) is formed, onto which items of luggage (50) can be placed and can be pushed into the lower compartment section (22),
wherein, adjacent to an imaginary horizontal separating plane (24) between the compartment sections (20, 22), an upper horizontal pivoting edge (30) is formed, onto which items of luggage (50) can be placed and can be pushed into the upper compartment section (20),
wherein the storage compartment opening (14) has an upper opening edge (33) which faces an upper side of the upper compartment section (20) and is adjoined by an auxiliary surface (34) which extends over the upper compartment section (20), is at an angle (a) in a range of 10° to 50° with respect to the separating plane (24) and, as the distance from the upper opening edge (33) increases, encloses an increasing distance from the separating plane (24),
wherein the upper horizontal pivoting edge (30) is formed by an elongate, rigid element which extends parallel to the upper opening edge (33), wherein an auxiliary plane (36) spanned by the auxiliary surface (34) is at a distance in a range from 20 to 45 cm and preferably from 25 to 35 cm from the upper horizontal pivoting edge (30), and
wherein the lower compartment section (22) has a compartment base (28) which is at a distance of at most 35 cm and preferably of at most 30 cm from the separating plane (24).

2. Storage compartment arrangement (8, 58) according to Claim 1,
wherein no partition is arranged between the lower compartment section (22) and the upper compartment section (20).

3. Storage compartment arrangement (8, 58) according to either of the preceding claims,
wherein the lower compartment section (22) and the upper compartment section (20) are offset horizontally with respect to each other at least in the region of the storage compartment opening (14).

4. Storage compartment arrangement (8, 58) according to one of the preceding claims,
wherein the upper horizontal pivoting edge (30) is spaced apart in the horizontal direction from the lower horizontal pivoting edge (26) and the upper opening edge (33) .

5. Storage compartment arrangement (8, 58) according to one of the preceding claims,
wherein the lower compartment section (22) and the upper compartment section (20) are each designed to accommodate a plurality of items of hand luggage having IATA standard maximum dimensions next to one another.

6. Storage compartment arrangement (8, 58) according to one of the preceding claims,
wherein the storage compartment opening (14) is closable by an upper storage compartment flap (16) and a lower storage compartment flap (18),
wherein the lower storage compartment flap (18) is assigned to the lower compartment section (22) and the upper storage compartment flap (16) is assigned to the upper compartment section (20).

7. Storage compartment arrangement (8, 58) according to one of the preceding claims,
furthermore having at least one passenger service unit (40) or a service duct on a lower side of the housing (12) .

8. Storage compartment arrangement (8, 58) according to Claim 7,
wherein the passenger service unit (40) or the service duct merges steplessly and with a continuous curvature into a form of the housing (12).

9. Vehicle (66) having a cabin (2), a floor (4), passenger seats (6) located on the floor (4), and at least one storage compartment arrangement (8, 58) according to one of Claims 1 to 8 arranged above the passenger seats (6).

10. Vehicle according to Claim 9,
wherein the lower horizontal pivoting edge (26) is at a vertical distance (d) in a range of 150-170 cm from the floor (4).

11. Vehicle according to Claim 9 or 10,
wherein the upper horizontal pivoting edge (30) is at a vertical distance (c) in a range of 175-195 cm from the floor (4).

12. Vehicle according to one of Claims 9 to 11,
wherein the auxiliary surface encloses an angle (a) in a range of 15° to 25° with respect to the separating plane (24) .

## Revendications

1. Agencement de compartiment de rangement (8, 58) pour une cabine (2) d'un véhicule (66), présentant :
au moins un compartiment de rangement (10) avec un boîtier (12), une ouverture de compartiment de rangement (14) pouvant être fermée, une section de compartiment inférieure (22) formée dans le boîtier (12) et une section de compartiment supérieure (20) formée dans le boîtier (12),
dans lequel la section de compartiment inférieure (22) et la section de compartiment supérieure (20) sont agencées directement l'une au-dessus de l'autre,
dans lequel l'ouverture de compartiment de rangement (14) s'étend au moins sur les hauteurs de construction des deux sections de compartiment (20, 22),
dans lequel un bord de pivotement horizontal inférieur (26) est formé sur une limite inférieure, orientée vers l'ouverture de compartiment de rangement (14), de la section de compartiment inférieure (22), sur lequel des bagages (50) peuvent être posés et insérés dans la section de compartiment inférieure (22),
dans lequel un bord pivotant horizontal supérieur (30) est formé de manière adjacente à un plan de séparation horizontal (24) imaginé entre les sections de compartiment (20, 22), sur lequel des bagages (50) peuvent être posés et insérés dans la section de compartiment supérieure (20),
dans lequel l'ouverture de compartiment de rangement (14) présente un bord d'ouverture supérieur (33) tourné vers un côté supérieur de la section de compartiment supérieure (20), auquel se raccorde une surface auxiliaire (34) s'étendant sur la section de compartiment supérieure (20), présentant un angle (α) par rapport au plan de séparation (24) dans une plage de 10° à 50°, qui inclut une distance croissante par rapport au plan de séparation (24) au fur et à mesure que la distance par rapport au bord d'ouverture supérieur (33) augmente,
dans lequel le bord de pivotement horizontal supérieur (30) est formé par un élément rigide allongé s'étendant parallèlement au bord d'ouverture supérieur (33), dans lequel un plan auxiliaire (36) défini par la surface auxiliaire (34) présente une distance par rapport au bord de pivotement horizontal supérieur (30) dans une plage de 20 à 45 cm et de préférence de 25 à 35 cm, et
dans lequel la section de compartiment inférieure (22) présente un fond de compartiment (28) qui présente par rapport au plan de séparation (24) une distance de 35 cm au plus et de préférence de 30 cm au plus.

2. Agencement de compartiment de rangement (8, 58) selon la revendication 1,
dans lequel aucune paroi de séparation n'est agencée entre la section de compartiment inférieure (22) et la section de compartiment supérieure (20).

3. Agencement de compartiment de rangement (8, 58) selon l'une quelconque des revendications précédentes,
dans lequel la section de compartiment inférieure (22) et la section de compartiment supérieure (20) sont décalées horizontalement l'une par rapport à l'autre au moins dans la zone de l'ouverture de compartiment de rangement (14).

4. Agencement de compartiment de rangement (8, 58) selon l'une quelconque des revendications précédentes,
dans lequel le bord de pivotement horizontal supérieur (30) est espacé dans la direction horizontale du bord de pivotement horizontal inférieur (26) et du bord d'ouverture supérieur (33).

5. Agencement de compartiment de rangement (8, 58) selon l'une quelconque des revendications précédentes,
dans lequel la section de compartiment inférieure (22) et la section de compartiment supérieure (20) sont chacune réalisées pour recevoir plusieurs bagages à main de dimensions maximales IATA côte à côte.

6. Agencement de compartiment de rangement (8, 58) selon l'une quelconque des revendications précédentes,
dans lequel l'ouverture de compartiment de rangement (14) peut être fermée par un volet de compartiment de rangement supérieur (16) et un volet de compartiment de rangement inférieur (18),
dans lequel le volet de compartiment de rangement inférieur (18) est associé à la section de compartiment inférieure (22) et le volet de compartiment de rangement supérieur (16) est associé à la section de compartiment supérieure (20).

7. Agencement de compartiment de rangement (8, 58) selon l'une quelconque des revendications précédentes,
présentant en outre au moins une unité de service de passager (40) ou un canal de service sur un côté inférieur du boîtier (12).

8. Agencement de compartiment de rangement (8, 58) selon la revendication 7,
dans lequel l'unité de service de passager (40) ou le canal de service se courbe de manière continue et progressive pour prendre une forme du boîtier (12).

9. Véhicule (66) avec une cabine (2), un plancher (4), des sièges de passagers (6) se trouvant sur le plancher (4), ainsi qu'au moins un agencement de compartiment de rangement (8, 58) selon l'une quelconque des revendications 1 à 8 agencé au-dessus des sièges de passagers (6).

10. Véhicule selon la revendication 9,
dans lequel le bord pivotant horizontal inférieur (26) présente une distance verticale (d) dans une plage de 150 à 170 cm du plancher (4).

11. Véhicule selon la revendication 9 ou 10,
dans lequel le bord pivotant horizontal supérieur (30) présente une distance verticale (c) dans une plage de 175 à 195 cm du plancher (4).

12. Véhicule selon l'une quelconque des revendications 9 à 11,
dans lequel la surface auxiliaire forme un angle (α) avec le plan de séparation (24) dans une plage de 15° à 25°.
